# EUROPEAN PATENT SPECIFICATION

(11) **EP 1 061 743 B1**
(45) Date of publication and mention of the grant of the patent: **14.11.2007**
(21) Application number: 99111163.4
(22) Date of filing: 08.06.1999
(51) Int. Cl.: H04N 7/16, H04N 7/173

(54) **Method and system for distributing information**
Verfahren und System zur Informationsverteilung
Procédé et système pour la distribution d'informations

(43) Date of publication of application: 20.12.2000
(73) Proprietor: Sony Deutschland GmbH, 10785 Berlin (DE); Sony France S.A., 75831 Paris Cedex 17 (FR)
(72) Inventor: Tetsuya, Kozo, 50829 Köln (DE); Bunney, William, 50829 Köln (DE); Asai, Nobuyuki, 75831 Paris Cedex 17 (FR)
(74) Representative: Rupp, Christian

(56) References cited:
- WO-A-93/09631
- WO-A-98/03016

## Description

The present invention relates to a method and a system for distributing information.

From EP-A-749 081 an information and advertising distribution system is known. A data server stores and updates a data base of information items and advertisements. The information items and advertisements are each categorized so that each has an associated information category. Work stations remotely located from the data server each include a display device, a communication interlace for receiving at least a subset of the information items and advertisements in the data server's database and local memory for storing the information items and advertisements received from the data server. An information administrator in each work station establishes communication with the data server from time to time so as to update the information items and advertisements stored in a local memory with at least a subset of the information items and advertisements stored by the data server. An information display controller in each work station displays on the work stations display device at least a subset of the information items and advertisements stored in a local memory when the work station needs predefined idleness criteria. At least a subset of the work stations include a profile of a storing subscriber profile data. The subscriber profile data represents subscriber information viewing preferences, indicating information categories for which the subscriber does and does not want to view information items. The information display controller includes a filter for excluding from the information items displayed on the display device those information items inconsistent with its subscriber profile data. According to this known system therefore a filter process is effected on the remote work stations on the basis of the information items and the subscriber profile data stored in the profiler of the work stations.

From US-A-5 515 098 a system for distributing commercials to an individually addressable subscriber terminal on a network is known. Commercial messages to be distributed over the network contain imbedded information identifying categories of recipients for each message. A server located on the network, provides each commercial with addresses of terminals to which the commercial is to be distributed. The addresses are selected by the server based on demographic and other information related to the households of subscribers. The commercial is received by an addressable set-top box and displayed on a TV screen.

From US-A-5 864 823 a system for distribution of advertisements to interested recipients only via one-way non-addressable television media and for transmission of orders from recipients to advertisers via two-way addressable Internet media is known. At the recipients side, each preliminary message is processed by a computer that stores recipients profile data, and if the profile indicates an interest, the corresponding advertisement is selected and its presentation is recorded at the time of transmission. The recipients never see the messages as they are intended for high-speed-volume automatic processing by the recipients computers. Each recipients computer compares all preliminary messages with recipients profile data so that each advertisement would be selected or rejected before it is transmitted. Profile data are collected by presenting relevant questions with multiple-choice answers to the recipient. The non-addressable communication medium therefore is only used for transmission of preliminary messages which are not viewable by the user. It is important to note that the preliminary message is sent prior to the advertisement and therefore the content itself. Prior to the transmission of a digital file containing an content an authorization message can be sent via e-mail to recipients.

Note that according to US-A-58 64 823 the content information to be displayed to the user of the terminal is transmitted completely separated (separate physical channel) to the messages.

From WO 93/09631 an information broadcasting system is proposed, which provides a large number of receivers accessed to a large amount of information using satellite or cable television transmission channels. To this aim, a central server broadcasts information to the receivers via said channels in form of data packets, each data packet containing content information as well as a packet ID. Each receiver comprises a user profile specifying content information the user is interested in. The data in said user profile is translated into specific packet ID information that is then stored in a filter list of the receiver. Each time a data packet is received, the receiver compares the packet ID of the incoming data packet with the list of packet ID values stored in the filter list.
A data packet which match any of the packet ID values in the filter list is then selected for further processing within the receiver. As a result, transmitted broadcast information responding to the topics specified in the user profile of the receiver is automatically selected into the receiver.

From WO 98/41020 a digital interactive system for providing full interactivity with live programming events is disclosed. Accumulation of the viewer profiles centrally at transmitter side is known from this document.

It is the object of the present invention to provide for an improved technique for distributing information in a network.

This object is achieved by means of the features of the independent claims. The dependent develop further the central idea of the present invention.

According to the present invention therefore a method for distributing information in a network is provided. Notifications are generated by attaching user profile information to content information to be transmitted. The notifications containing the content information with the attached user profile information are broadcast over a nonaddressed channel from a transmitter to a receiver of the network. With other words, the broadcasting of the content information and the attached user profile information is effected in one step. The broadcast notifications are filtered in the receiver by matching data stored as local profile data in the receiver with a broadcast user profile information contained in the corresponding notification.

The content information and the attached user profile information of a notification can be broadcast over the same physical channel.

The content information of a notification with a user profile information having successfully passed the filter step can be displayed on a monitor of the receiver. Therefore according to this issue of the invention the content information transmitted in one step together with the user profile information is displayed on a monitor of the receiver and therefore immediately viewable by the user of the receiver.

A central profile data base can be provided in the transmitter, wherein a synchronization channel can be established for synchronizing the data respectively of a receiver with the data of the central profile data base. The provision of the central profile data base to be synchronized with the local data stored in the receiver enables a central management of profile data and therefore can assure that the local profile data and a central profile data base are always up to date.

The synchronization channel thereby can be an addressed channel (such as for example the Internet).

A return channel from the receiver to the transmitter can be automatically established by activating an action button on a screen of the receiver.

The receiver can comprise a set-top box, wherein received notifications from the transmitter are stored in the set-top box.

A prioritization of the stored notifications received from the transmitter on the basis of the local profile data can be effected in the set-top box. Thereby it is to be noted that usually only a predetermined and limited number of notifications can be stored in the set-top box and in case the total number of notifications received from the transmitter exceeds the limited number storable in the set-top box, only those notifications being more relevant for the corresponding receiver are stored in the set-top box.

According to the present invention furthermore a method for distributing information in a network is provided. Thereby notifications containing content information with attached user profile information are sent from a node to a terminal. The notifications transmitted are processed in the terminal on the basis of a local profile data associated with the terminal. The local profile data of the terminal is synchronized with a central profile data base associated with a node.

A synchronization channel can be provided between the node and respectively a terminal to synchronize periodically the local profile data of the corresponding terminal with a central profile data base of the node.

According to the present invention furthermore a system for distributing information is provided. The system comprises a transmitter generating notifications by attaching user profile information to content information to be transmitted.

A broadcasting unit is provided for broadcasting the notification containing the content information with the attached user profile information over a nonaddressed channel to a receiver. In the receiver, broadcast notifications are filtered by matching local profile data stored in the receiver with the profile information transmitted with the notification by the broadcaster.

The receiver can comprise a monitor for displaying information of a notification having a user profile information having successfully passed the filter.

The content information in the attached user profile information of a notification can be broadcast over the same physical channel.

A central profile data base can be provided associated with the transmitter. A synchronization channel can be provided for synchronizing the data respectively of a local profile data of a receiver with the data of the central profile data base.

The synchronization channel can be an addressed channel, such as for example the Internet.

A return channel from the receiver to the transmitter can be automatically established by activating an action button on the screen of the receiver.

The receiver can comprise a set-top box, wherein received notifications from the transmitter are stored in a storage unit of the set-top box.

Only notifications which have successfully passed the filter can be stored in the storage unit of the set-top box.

A prioritization of the stored notifications received from the transmitter on the basis of the local profile data can be effected in the set-top box.

According to the present invention furthermore a system for distributing information in a network is provided. The network comprises a node and at least one terminal. Respectively one terminal contains local profile data to process notifications received from the node on the basis of the information of the local profile data. The node comprises a central profile data base. The local profile data of the terminals are synchronized with the central profile data base of the node. With other words, the local profile data and the central profile data base are always updated in a bi-directional way.

A synchronization channel between the node and respectively a terminal can be provided to synchronize periodically the local profile data of the corresponding terminal with the central profile data base of the node.

The notifications can respectively comprise content information and profile information attached thereto.

Further advantages, objects and features of the present invention will come clear from the following detailed explanation of preferred embodiments and by referencing to the figures of the enclosed drawings.
Figure 1 shows the communication channels according to the present invention,
Figure 2 shows the internal structures of a transmitter and a receiver according to the present invention,
Figure 3 shows the structure of a notification according to the present invention,
Figure 4 shows a first example for an application of the present invention,
Figure 5 shows a further application of the present invention,
Figure 6 shows a still further application of the present invention, and
Figure 7 shows a still further application of the present invention.

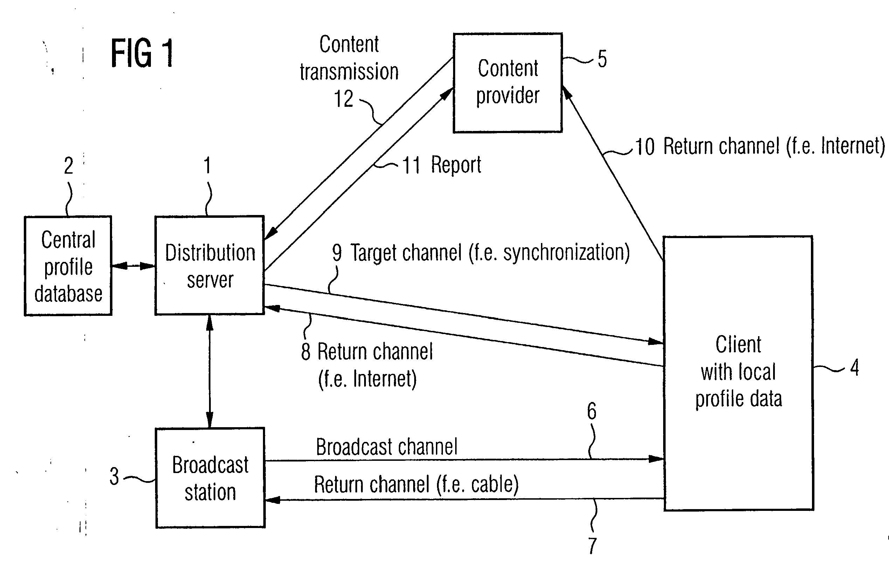

With reference to figure 1 the communication channels of a system according to the present invention will be explained. A system can be generally distinguished into a transmission side comprising a distribution server 1, a broadcast station 3, a content provider 5 and profile data 2. On the other hand there is a receiving side (client) 4.

Regarding the transmission side, a content provider 5 can communicate over a content transmission channel 12 with the distribution server 1. The distribution server 1 can for example send transmission reports over a channel 11 to the content provider 5. The transmission reports sent over the channel 11 represent information regarding any content transmitted to the receiving side (client) 4. The distribution server 1 is connected with profile data 2 and a broadcast station 3. Generally speaking the distribution server 1 receives content of the content provider 5 over the content transmission channel 12. The distribution server 1 extracts from the content received from the content provider 5 typical representative user category information. The content information and the user category information is given from the distribution server 1 to the broadcast station 3. The broadcast station 3 sends notification comprising the content information stemming from the content provider 5 and user profile information, which can be the user category information in coded form, over a nonaddressed broadcast channel 6 to any client (receiver) 4 which can be reached over the nonaddressed broadcast channel 6 by the broadcast station 3. The decision, whether the notification sent from the broadcast station 3 is relevant for a client 4 is effected on the receiving (client) side 4 on the basis of the user profile information attached to the content information broadcast by the broadcast station 3.

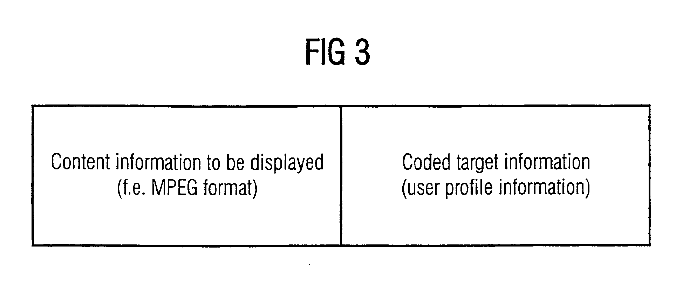

Reference is made to Figure 3 showing the format (structure) of a notification according to the present invention. As can be seen from figure 3, a notification according to the present invention contains content information for a client, which can be for example information coded in the MPEG format. Fixedly attached to the content information a coded target information (user profile information) is comprised in the notification according to the present invention.

Returning to figure 1, as has already been set forth the content information stemming from the content provider 5 is always sent from the broadcast station 3 to the client 4 over a nonaddressed broadcast channel 6. Besides this non-addressable broadcast channel 6 for example a addressable target channel 9 can be provided between the distribution server 1 and the client 4.

On the other hand, the client 4 can communicate with the transmitting side (distribution server 1, content provider 5, broadcast station 3) over a addressable channels. In response to a content information received from the broadcast station 3 over the non-addressable broadcast channel 6 the client 4 can communicate directly with the content provider 5 over a return channel 10, which is addressable, as it is the case for example in the internet. The client 4 furthermore can communicate with the distribution server 1 over a return channel 8, which can also be implemented by an Internet link.

The client 4 furthermore can communicate with the broadcast station 3 over a return channel 7. Again this return channel 7 can be implemented by the internet. In case the broadcast channel 6 is cable link, this cable link can also be used for the return channel 7.

Note that the broadcast channel 6 can be realized by different physical channel, such as for example wireless communication as well as fiber optic cable communication links.

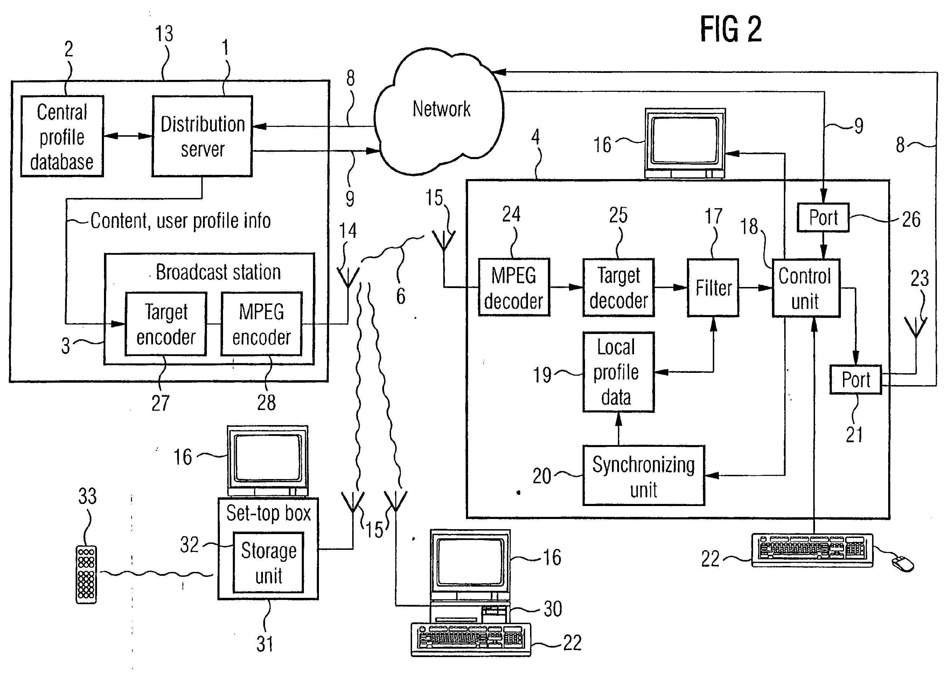

With reference to figure 2 now the internal structure of a transmitter 13 and a receiver 4 according to the present invention will be explained. As can be seen from figure 2, a transmitting side which is generally denoted with the reference sign 13 comprises a distribution server 1, a central profile data base 2 and a broadcast station 3. The broadcast station 3 comprises a target encoder 27 and a MPEG encoder 28. The distribution server 1 transmits to the broadcast station 3 content information to be broadcast as well as user profile information, i. e. information setting forth the categories of users which might be interested in the corresponding content. The target encoder 27 of the broadcast station 3 encodes the user profile information received from the distribution server 1 according to a predetermined format and attaches this encoded target information to the content information to be transmitted, as has already been explained with reference to figure 3. The MPEG encoder 28 encodes the content information to be transmitted and to be displayed on a monitor 16 of the receiver 4 according to a predetermined standard, such as for example the MPEG standard.

In the broadcast station 3 therefore notifications respectively comprising content information in the MPEG format as well as encoded target information (encoded user profile information) are generated and then transmitted over a broadcast channel by means of an antenna 14. Note that the antenna 14 is only shown as an example for a wireless broadcast transmission and other non-addressable broadcast channels, such as for example cable transmission can be used.

In any way, as the notifications generated in the broadcast station 3 are transmitted over a non-addressable channel, the possible number of terminals or clients receiving the notifications transmitted is principally unlimited.

The clients can be implemented in different forms, such as for example a PC 30 with a receiver and an antenna 15, a TV with a set-top box 31 and a monitor 16 or a so-called IDTV (Interactive digital TV).

The receiver, though they can be implemented in different forms, if all one thing in common which is a filter function for broadcast notifications. The internal structure of a receiver 4 will now be explained. The receiver 4 receives broadcast notification of a non-addressable channel 6 by means of an antenna 15. The received broadcast notifications from the antenna 15 is first MPEG decoded 24 and then the target information is decoded in a decoder 25. Therefore the user profile information can be supplied from the target decoder 25 to a filter 17. The filter 17 decides whether a notification received has some relevance or use for the receiver 4. This decision of the filter 17 is made by matching the user profile information of a notification received with the content of a local profile data 19 in which the particular user profile information for the user of the receiver 4 is stored. In case the decision step in the filter 17 shows that the notification received has some relevance for the user of the receiver 4, as for example the user profile information attached to the content of the notification received has at least some overlap with the content of the local profile data 19, the content information of the notification received is supplied to a control unit 18 and then displayed on a monitor 16 of the receiver 4.

In case the receiver is implemented as a set-top box 31 associated with a TV receiver 16, broadcast notification received by means of the antenna 15 can be stored in a storage unit 32, particularly if the TV is not switched on. As the storage unit 32 of the set-top box 31 has only a limited storage capacity, the number of notifications received can exceed the storage capacity of the storage unit 32. In this case the set-top box 31 effects a prioritization process, i. e. only the notifications having a user profile information attached to the content which has a nearly complete overlap with the information of the local profile data is stored in the storage unit 32.

As has already been explained with reference to figure 1, a receiver 4 can also communicate over addressable communication channels 8, 9. Therefore in the receiver 4 a input port 26 as well as a output port 21 are provided. The input port 26 and the output port 21 are respectively connected to the control unit 18. By means of the output port 21 the receiver 4 can communicate for example with the transmitter 13 either a broadcast channel, which is symbolically shown by means of an antenna 23 or by a addressable channel 8, which can be for example an Internet connection.

By means of the input port 26 information for example from the transmitter 13 can be sent to the receiver 4 over an addressable channel 9, as for example an Internet connection.

As the filter function effected by the filter 17 the receiver 4 is an important point and this filter function is based on the content of the local profile data 19, it is very important for the shown system that the content of the local profile data 19 of a receiver 4 is always up to date. Therefore according to the present invention a synchronizing function for synchronizing the content of a local profile data 19 of a receiver 4 and the content of the central profile data base 2 of the node or transmitter 13 is provided. To this aim a synchronizing unit 20 is connected between the control unit 18 and the local profile data 19 of the receiver 4. Note that it is possible that a user is not using one receiver or terminal 4, but can use different receivers 4 with different geographical positions. As for example the activity of the user is always detected and analyzed for the content of the central profile data base 2, by means of the synchronizing function and the synchronizing unit 20 of a receiver 4 it can be assured that also other receivers 4 used by the same user are up to date by synchronizing their content with the content of the central profile data base 2. Of course, the user profile information can not only be generated automatically, but it can be left open to the user to modify the content of the local profile data 19 by means of an input device of the receiver 4, which can be for example a keyboard 22 or the remote control 33 of a TV receiver provided with a set-top box 31.

In the following the differences between well known addressed notifications (such as for example e-mail) and broadcast notifications according to the present invention will be set forth in detail.

An addressed notification contains the specific user names of the people who will receive the notification, and the set of recipients is small. The addressing is therefore possible, if the transmitter knows the recipient's user name.

In contrast thereto a targeted or broadcast notification according to the present invention is a notification which defines who will receive a notification based on information stored in a members profile, and the set of recipients is large. The targeting or broadcasting of notifications can therefore all be used in case the transmitter does not know the recipient's user name.

A broadcast notification therefore is a notification which has its targeting information encoded for transmission over a broadcast stream and subsequent filtering on the client's side.

The following table summarizes the difference between addressed notifications, such as for example e-mail, and a broadcast notification.

### Addressed notifications

*Addressed* notifications are delivered over a transport mechanism that supports individually-addressable destinations.

*Filtered on Server -* Addressed notifications are filtered (addressed to interested members) on the server using user profiles stored on the server.

*Contain No Topics -* The targeting information for a addressed notification is converted into delivery addresses on the server. No topical information is transmitted to the destination.

### Broadcast notifications

*Not Addressed -* Broadcast notifications are delivered over a transport mechanism that has no notion of individual addresses (each broadcast notification is sent to all destinations).

*Filtered on Client -* Broadcast notifications are filtered (only displayed to interested members) on the client using user profiles stored on the client.

*Contain Topics -* Broadcast notifications carry encoded targeting information all the way to the destination.

The broadcast notification stream can be sent for example over a satellite, cable or terrestrial broadcast system. As a further alternative an Ethernet connection can be used. An important feature of the broadcast notification is the filter function on the client's side. When a notification is sent over a broadcast stream, or a broadcast clients receiver copy of the notification. In a broadcast environment, notifications that are not of interest to an individual user must be filtered out on the client, so that only appropriate notifications are actually displayed. The filter process can be effected on the client-side for example based on topical and demographic information included in the notification.

The broadcast channel serves as full-time (although one-way) connection as long as the client is powered on. To take full advantage of the broadcast capability, broadcast notifications can also be received and the client is not connected (i. e. not logged in and no return channel established). For example it can be sufficient, if the client is in a stand by or low-power state to receive and store the broadcast notifications.

After a broadcast notification is received through the broadcast channel, the user is able to examine the content information of the notification and to determine whether he is interested in acting on it. If he decides to perform an action in response to the content of the notification, a return channel connection for example to the Internet can be established. For example, if the user receives a notification which content information is about a release of a CD he might be interested in buying, an action button on the screen of the monitor of the receiver 4 can establish the return channel 8 to the Internet and direct the user to a website where he can complete the purchase.

The above said can therefore be summarized as following:
- "Delivering of notifications over a broadcast channel",
- "Filtering of broadcast notifications on the client's side",
- Receiving program content together with data: In addition to the notification data actual audio and video program content can be received and played.
- Receiving of broadcast notifications when offline,
- Establishing of a return channel on-demand: The broadcast notifications are received on a separate broadcast channel, and the return channel connection can only be made when needed.
- Synchronizing of user profiles: In order for the client to be able to perform a filtering of the broadcast notifications, a copy of the profile information of the central profile data base has to be maintained on the client machine.

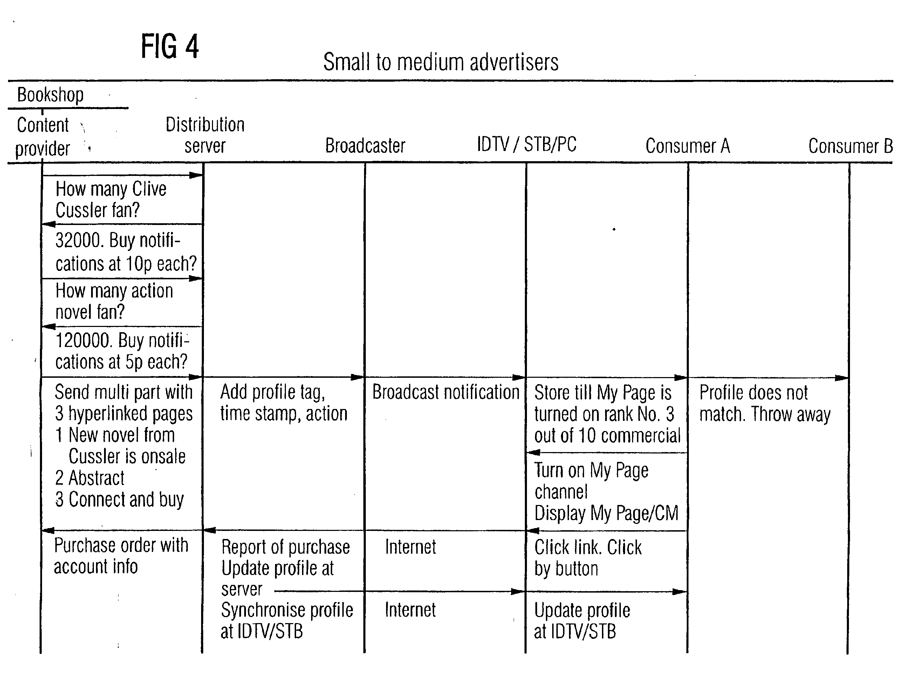

With reference to figures 4 to 7 applications of the present invention will now be explained.

For example figure 4 shows an application for small to medium advertisers. A content provider which can be a book shop will make a request to the distribution server "How many Clive Cussler fans?". Based on the central profile data base the distribution server will give the number and price of possible interested users. The content provider, which can be a book shop for example, will then give the content information (for example hyper linked pages) to the distribution server which adds a profile tag, a time stamp and an action. The time stamp represents the life time of the notification, i. e. how long the notification can be viewed and responded to on a client's side. The content information and the attached profile tag, time stamp and action is then broadcast to consumers, which can have an IDTV, a set-top box (STB) or a PC. The consumer can then respond to a notification received and which has successfully passed the filtering step by clicking on buttons on the screen on their monitor. This action of the consumer in response to received broadcast notification is used to update the profile of the central profile data base. Then the local profiles of the consumers (clients) are synchronized with the updated profile of the central profile data base for example by means of an Internet connection. In the example of figure 4 only the local profile information of consumer A does have an overlap to the profile tag of the broadcast notification and therefore only the consumer A can view and respond to the broadcast notification. The profile of the consumer B, however, does not match to the profile tag of the broadcast notification and therefore the consumer B has no possibility to see the content of the broadcast notification.

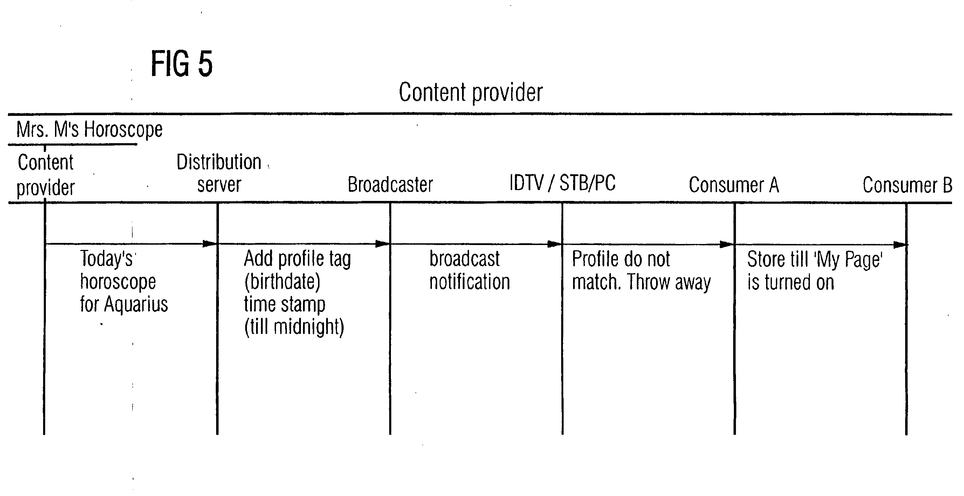

Figure 5 shows an example for the application of the present invention for content provider in the proper sense. A content provider supplies as a content today's horoscope for Aquarius to the distribution server. The distribution server adds the profile tag, which can be the birthday of the consumer as well as a time stamp (till midnight), which indicates that the notification can only be viewed and responded to at the consumer's side until the end of a predetermined life span. The content information with the attached profile tag and time stamp is then broadcast to consumers. In the example of figure 5, the profile of consumer A does not match and therefore consumer A will never see the content of the received broadcast notification. However, in the example of figure 5 the profile of consumer B does match the profile tag, i.e. according to the local profile information consumer B has a birthday responding to the sign "Aquarius" and therefore the notification will be stored in the receiver of consumer B and shown to the consumer B as soon as he turns on his receiver.

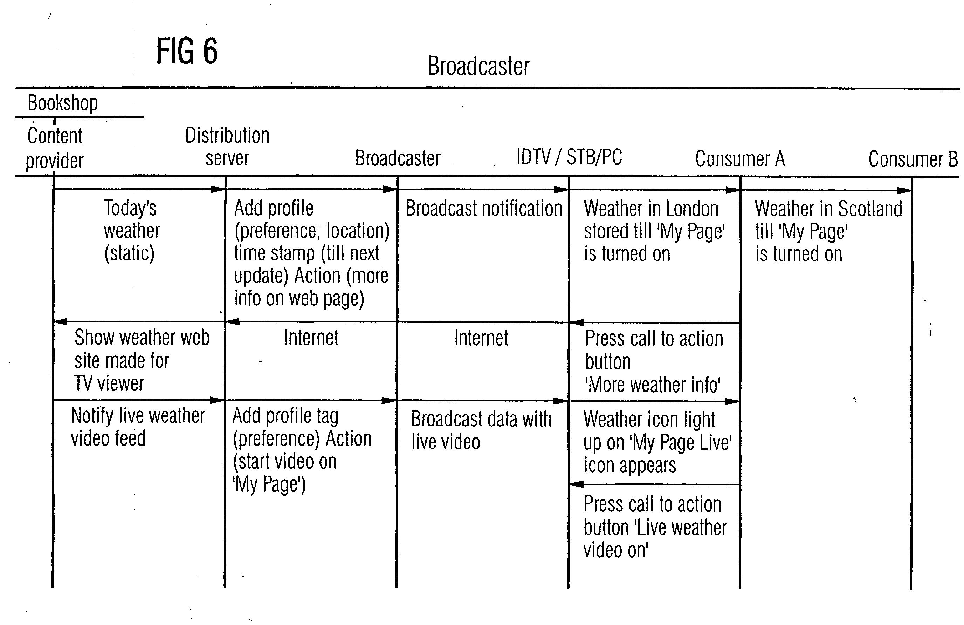

With reference to figure a further application of the present invention will be explained. In the example of figure 6 the content provider is broadcaster. This broadcaster gives content information, i.e. a weather information to the distribution server. The distribution server adds profile information, i.e. a profile tag comprising of example preferences and locations of relevant consumers. Furthermore a time stamp (for example until the next update) and an action (more info on a web page) is attached to the content information supplied from the broadcaster. The notification comprising the content information from the broadcaster as well as the added information of the distribution server is then broadcast to the consumers. The consumers can press an action button on the screen of their monitor to get further information, for example from the broadcaster.

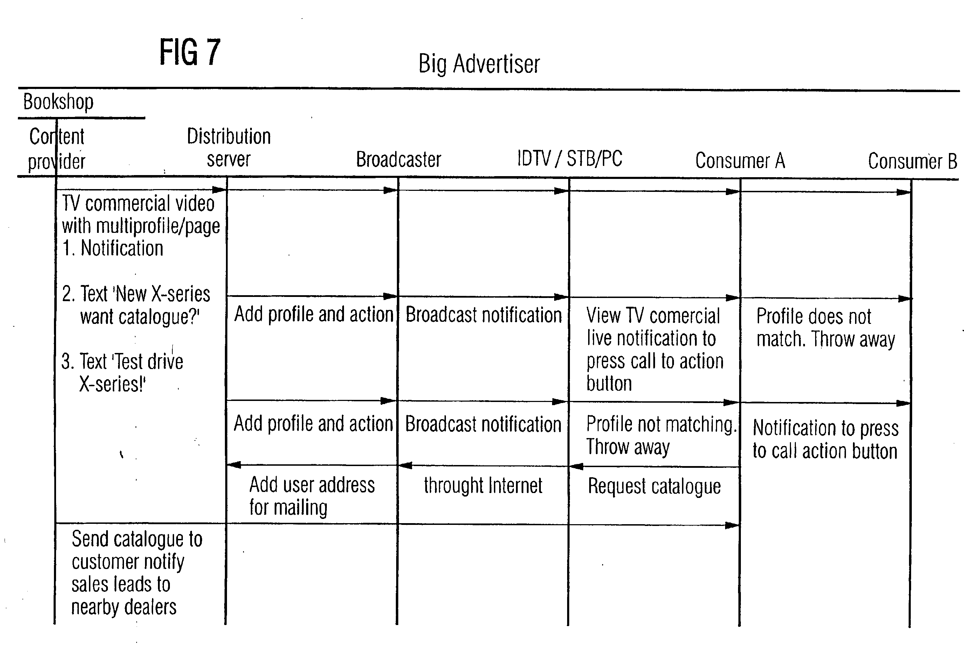

Figure 7 shows a still further application of the present invention. In this case the content provider is a big advertiser. The content provider in this case gives a content comprising video and text information to the distribution server. As usual the distribution server adds a profile tag and an action to the content information supplied from the content provider. In case the profile of a consumer matches the profile tag of the broadcast notification, the consumer, in the example of figure 7 consumer A, can initiate an action for example to request a catalogue to the internet channel.

## Claims

1. A method for distributing information in a network, comprising the following steps:
- generating the information by attaching (27) user profile information to content information to be transmitted,
- broadcasting (3) the information containing the content information with the attached user profile information over a non-addressed channel (6) from a transmitter (13) to a receiver (4), the transmitter (13) being connected to a central profile database (2), and
- filtering (17) the broadcast information in the receiver (4) by matching data stored in a local profile database (19) of the receiver (4) with the user profile information contained in the broadcast information,
wherein
- a user action at the receiver (4) is used to update the central profile database (2) using a return channel (8), and
- the local profile database (14) is then synchronized with the updated central profile database (2) using a target channel (9),
**characterized in that** the return channel (8) from the receiver (4) to the transmitter (13) is automatically established by said user action comprising activating an action button on a screen on a monitor (16) of the receiver (4), whereby said central profile database (2) is updated.

2. A method according to claim 1,
**characterized in that**
the content information and the attached user profile information are broadcast over the same physical channel (6).

3. A method according to claim 1 or 2,
**characterized by** the further step of
displaying (16) the content information of information having a user profile information having successfully passed the filter step (17) on a monitor (16) of the receiver (4).

4. A method according to claim 3,
**characterized in that**
the displaying step (16) is effected immediately after the filter step (17).

5. A method according to anyone of the preceding claims,
**characterized in that**
the receiver (4) comprises a set-top box (31), wherein received information from the transmitter (13) are stored (32) in the set-top box (31).

6. A method according to claim 8,
**characterized in that**
a prioritization of the stored information received from the transmitter (13) on the basis of the local profile database (19) is effected in the set-top box (31).

7. A method according to anyone of the preceding claims,
**characterized in that**
additionally to the profile information a live span information is attached to the content information.

8. A receiver for broadcast information, comprising:
- means for receiving information containing content information with attached user profile information over a non-addressed channel (6) from a transmitter (13), and
- means for filtering (17) the broadcast information in the receiver (4) by matching data stored in a local profile database (19) of the receiver (4) with the user profile information contained in the broadcast information,
- means for establishing a return channel (9) to the transmitter (13) in order to update a central profile database (2) of the transmitter (13) upon a user action, and
- receiving means for synchronizing the local profile database (19) with the updated central profile database (2) over a target channel (9),
**characterized by** means for automatically establishing the return channel (8) from the receiver (4) to the transmitter (13) in response to said used action comprising activating an action button on a screen on a monitor (16) of the receiver (4), whereby said central profile database (2) is updated.

## Patentansprüche

1. Verfahren zum Verteilen von Information in einem Netzwerk
mit den Verfahrensschritten:
Erzeugen der Information durch Anhängen (27) einer Benutzerprofilinformation an die zu sendende Inhaltsinformation,
Senden (3) der die Inhaltsinformation mit der angehängten Benutzerprofilinformation enthaltenden Information von einem Sender (13) über einen nicht adressierten Kanal (6) an einen Empfänger (4), wobei der Sender (13) mit einer zentralen Profildatenbank (2) verbunden ist, und
Filtern (17) der Sendeinformation in dem Empfänger (4) durch Vergleichen von in einer lokalen Profildatenbank (19) des Empfängers (4) gespeicherten Daten mit der in der Sendeinformation enthaltenen Benutzerprofilinformation,
wobei
eine Benutzeraktion in dem Empfänger (4) verwendet wird, um die zentrale Profildatenbank (2) unter Verwendung eines Rückkanals (18) zu aktualisieren, und
die lokale Profildatenbank (19) dann unter Verwendung eines Zielkanals (9) mit der aktualisierten zentralen Profildatenbank (2) synchronisiert wird,
**dadurch gekennzeichnet,**
**daß** der Rückkanal (18) von dem Empfänger (4) zu dem Sender (13) durch die genannte Benutzeraktion automatisch eingerichtet wird, die das Aktivieren einer Aktionsschaltfläche auf einem Bildschirm auf einem Monitor (16) in dem Empfänger (4) umfaßt, wodurch die zentrale Profildatenbank (2) aktualisiert wird.

2. Verfahren nach Anspruch 1,
**dadurch gekennzeichnet,**
**daß** die Inhaltsinformation und die angehängte Benutzerprofilinformation über den gleichen physikalischen Kanal (16) gesendet werden.

3. Verfahren nach Anspruch 1 oder 2,
**gekennzeichnet durch** den weiteren Verfahrensschritt,
daß die Inhaltsinformation einer Information, die eine Benutzerprofilinformation aufweist, welche den Filterungsschritt (17) erfolgreich durchlaufen hat, auf einem Monitor (196) des Empfängers (4) angezeigt wird.

4. Verfahren nach Anspruch 3,
**dadurch gekennzeichnet,**
**daß** der Anzeigeschritt (16) unmittelbar nach dem Filterungsschritt (17) ausgeführt wird.

5. Verfahren nach einem der vorhergehenden Ansprüche,
**dadurch gekennzeichnet,**
**daß** der Empfänger (4) eine Set-Top-Box (31) enthält, wobei von dem Sender (13) empfangene Informationen in der Set-Top-Box (31) gespeichert werden (32).

6. Verfahren nach Anspruch 5,
**dadurch gekennzeichnet,**
**daß** in der Set-Top-Box (31) eine Priorisierung der aus dem Sender (13) empfangenen gespeicherten Informationen auf der Basis der lokalen Profildatenbank (19) durchgeführt wird.

7. Verfahren nach einem der vorhergehenden Ansprüche,
**dadurch gekennzeichnet,**
**daß** zusätzlich zu der Profilinformation eine Lebensdauerinformation an die Inhaltsinformation angehängt wird.

8. Empfänger für Sendeinformation, der aufweist:
Mittel zum Empfangen einer Information, die eine Inhaltsinformation mit einer angehängten Benutzerprofilinformation enthält, über einen nicht adressierten Kanal (6) von einem Sender (13),
Mittel zum Filtern (17) der Sendeinformation in dem Empfänger (4) durch Vergleichen von in einer lokalen Profildatenbank (19) des Empfängers (4) gespeicherten Daten mit der in der Sendeinformation enthaltenen Benutzerprofilinformation,
Mittel zum Einrichten eines Rückkanals (9) zu dem Sender (13) zum Aktualisieren einer zentralen Profildatenbank (2) des Senders (13) auf eine Benutzeraktion hin und
Empfangsmittel zum Synchronisieren der lokalen Profildatenbank (19) mit der aktualisierten zentralen Profildatenbank (2) über einen Zielkanal (9),
**gekennzeichnet durch**
Mittel zum automatischen Einrichten des Rückkanals (8) von dem Empfänger (4) zu dem Sender (13) als Reaktion auf die genannte Benutzeraktion, die das Aktivieren einer Aktionsschaltfläche auf einem Bildschirm auf einem Monitor (16) in dem Empfänger (4) umfaßt, wodurch die zentrale Profildatenbank (2) aktualisiert wird.

## Revendications

1. Procédé de distribution d'informations dans un réseau,
comprenant les étapes suivantes :
- générer les informations en joignant (27) des informations de profil utilisateur aux informations de contenu à transmettre ;
- diffuser (3) les informations contenant les informations de contenu avec les informations de profil utilisateur jointes sur un canal non adressé (6) d'un émetteur (13) vers un récepteur (4), l'émetteur (13) étant connecté à une base de données de profils centrale (2), et
- filtrer (17) les informations diffusées dans le récepteur (4) en faisant correspondre les données stockées dans une base de données de profils locale (19) du récepteur (4) avec les informations de profil utilisateur contenues dans les informations diffusées,
dans lequel
- une action de l'utilisateur au niveau du récepteur (4) est utilisée pour actualiser la base de données de profils centrale (2) en utilisant un canal de retour (8), et
- la base de données de profils locale (19) est ensuite synchronisée avec la base de données de profils centrale (2) actualisée en utilisant un canal cible (9),
**caractérisé en ce que**
le canal de retour (8) du récepteur (4) à l'émetteur (13) est automatiquement établi par ladite action de l'utilisateur comprenant l'activation d'un bouton d'action sur un écran sur un moniteur (16) au niveau du récepteur (4), moyennant quoi ladite base de données de profils centrale (2) est actualisée.

2. Procédé selon la revendication 1,
**caractérisé en ce que**
les informations de contenu et les informations de profil utilisateur jointes sont diffusées sur le même canal physique (6).

3. Procédé selon la revendication 1 ou 2,
**caractérisé par** l'étape supplémentaire consistant à
afficher (16) les informations de contenu d'informations ayant des informations de profil utilisateur qui ont passé avec succès l'état de filtrage (17) sur un moniteur (16) du récepteur (4).

4. Procédé selon la revendication 3,
**caractérisé en ce que**
l'étape d'affichage (16) est exécutée immédiatement après l'étape de filtrage (17).

5. Procédé selon l'une quelconque des revendications précédentes,
**caractérisé en ce que**
le récepteur (4) comprend un boîtier décodeur (31), dans lequel les informations reçues depuis l'émetteur (13) sont stockées (32) dans le boîtier décodeur (31).

6. Procédé selon la revendication 8,
**caractérisé en ce que**
une hiérarchisation des informations stockées reçues depuis l'émetteur (13) se basant sur la base de données de profils locale (19) est exécutée dans le boîtier décodeur (31).

7. Procédé selon l'une quelconque des revendications précédentes,
**caractérisé en ce que**
en plus des informations de profil, des informations de durée de vie sont jointes aux informations de contenu.

8. Récepteur pour informations diffusées,
comprenant
- un moyen destiné à recevoir des informations contenant des informations de contenu avec des informations de profil utilisateur jointes sur un canal non adressé (6) depuis un émetteur (13), et
- un moyen destiné à filtrer (17) les informations diffusées dans le récepteur (4) en faisant correspondre les données stockées dans une base de données de profils locale (19) du récepteur (4) avec les informations de profil utilisateur contenues dans les informations diffusées,
- un moyen destiné à établir un canal de retour (9) vers l'émetteur (13) afin d'actualiser une base de données de profils centrale (2) de l'émetteur (13) lors d'une action de l'utilisateur, et
- un moyen destiné à synchroniser la base de données de profils locale (19) avec la base de données de profils centrale (2) actualisée sur un canal cible (9),
**caractérisé par**
un moyen destiné à établir automatiquement le canal de retour (8) du récepteur (4) à l'émetteur (13) en réponse à ladite action de l'utilisateur comprenant l'activation d'un bouton d'action sur un écran sur un moniteur (16) au niveau du récepteur (4), moyennant quoi ladite base de données de profils centrale (2) est actualisée.
